# EUROPEAN PATENT APPLICATION

(11) **EP 1 480 382 A1**
(43) Date of publication of application: **24.11.2004**
(21) Application number: 04300294.8
(22) Date of filing: 18.05.2004
(51) Int. Cl.: H04L 12/24

(54) **Node topology display based on geographical information**

(30) Priority: 21.05.2003 US 442237
(71) Applicant: ALCATEL, 75008 Paris (FR)
(72) Inventor: Elkady, Amr, Ottawa Ontario K2H 9A9 (CA); Jansen, Arnold, Ottawa Ontario K1Y 4A4 (CA); Wimmer, Kurt A., Ottawa Ontario K2B 5M3 (CA)
(74) Representative: Feray, Valérie

(57) **Abstract**

A method and system for displaying a node of a communication network on a network management map. The geographical location of the node is determined by a positioning device such as GPS (or equivalent) device and stored in the home information of the node. The node is displayed in a position on the network management map in accordance with the geographical location. The GPS device may be located in the node or merely used to determine the longitude and latitude positions of the node which are then stored in the longitude and latitude fields of the node.

## Description

### FIELD OF THE INVENTION

The invention is in the field of placing or locating nodes on a graphical user interface map.

### BACKGROUND AND BRIEF DESCRIPTION OF THE INVENTION

The invention relates to the problem of discovering nodes and topology in network management software. In the normal case, operators will manually go through every node and manually place the node on the map of the Network Management System (NMS) based on its location.

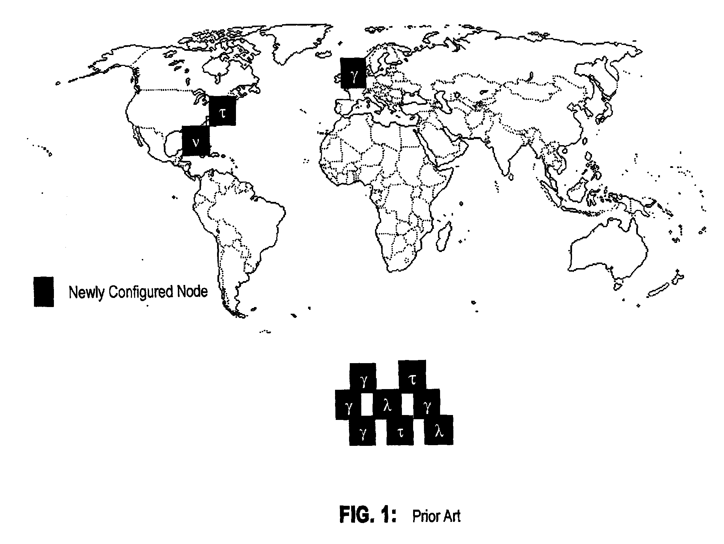

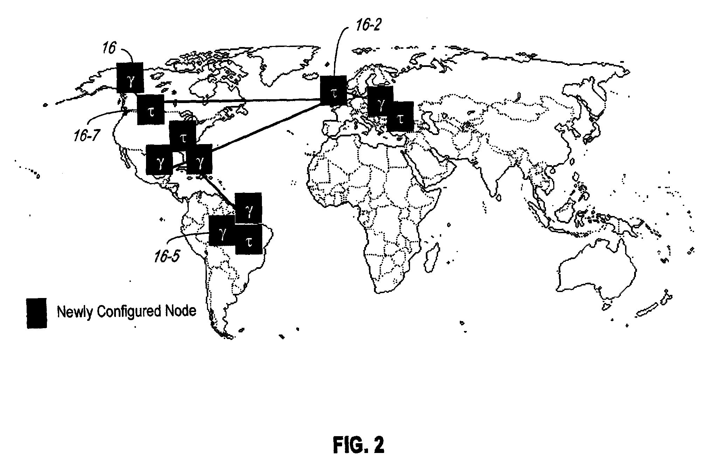

Figure 1 is a map showing newly placed or newly discovered nodes not positioned on the map, and Figure 2 discloses newly discovered nodes as they are placed on a map where they are physically located. This system has problems such as:
1. The prior art does not solve the problem of manually placing the nodes on the graphical user interface (GUI) after they are discovered.
2. Discoveries of nodes can happen for tens of nodes at the same time, requiring an operator to manually go through each of them, determine their location and place them on the network management map. This can be very time consuming.
3. When installing Network management software into existing locations, the operators would have to place all the nodes in the database into the map, which can be in the hundreds.
The present invention solves the above-listed problems by causing:
1. Each node to carry its location information in two fields of its home information. The entries in the fields will represent the longitude and latitude of the node location. Advantageously, nodes can carry a global positioning system (GPS) locating device that would allow them to set the longitude and latitude information automatically. This will virtually eliminate the possibility of incorrectly specifying the longitude and latitude of a node. Other node position locating systems may be used to provide node longitude and latitude information and the node configuration.
2. The network management software will read these fields along with the rest of the node identification information upon discovery.
3. The longitude and latitude values will be mapped to the Network management map and the new node icon will be placed at this location.
4. The database on the network management software will carry the longitude and latitude information for the graphical maps. When a new node is discovered, its information will be mapped to the map position based on the most approximate position.

The invention thus is directed to a method and system for displaying a node of a communication network on a network management map characterized in that the geographical location of the node is determined by a precise positioning or locating device, and the node is displayed in a position on the network management map in accordance with its actual geographical location. A GPS device or equivalent may be used to provide the node's location in longitude and latitude terms. The geographical node location is stored in a node in longitude and latitude fields of the home information of the node. The home information of the node is transmitted to the network management system of the communication network for displaying on the network management map. When a new node is discovered in a communication network, the network management system requests home information of the discovered node, and stores the requested home information in the database of the network management system and displays the discovered node on the network management map in a position that is in accordance with the node specific longitude and latitude fields in the requested home information.

Thus, the basic objective of the invention is to provide geographical location descriptors (in longitude and latitude) of network nodes which may be accurately located physically on a graphical user interface map.

### BRIEF DESCRIPTION OF THE DRAWINGS

The above and other objects, advantages and features of the invention will become more apparent when considered with the following specification and accompanying drawings wherein:
Figure 1 is a prior art disclosure of newly discovered nodes which are positioned or physically located on the map,
Figure 2 illustrates newly discovered nodes placed automatically on the map where they are physically located according to the invention,
Figure 3 is a node configuration showing two new data fields for longitude and latitude according to the invention,
Figure 4 is a schematic diagram of a network management system incorporating and illustrating the invention, and
Figure 5 is a schematic flow chart diagram for the sequence of events for adding newly discovered nodes to be placed on a map.

### DETAILED DESCRIPTION OF THE INVENTION

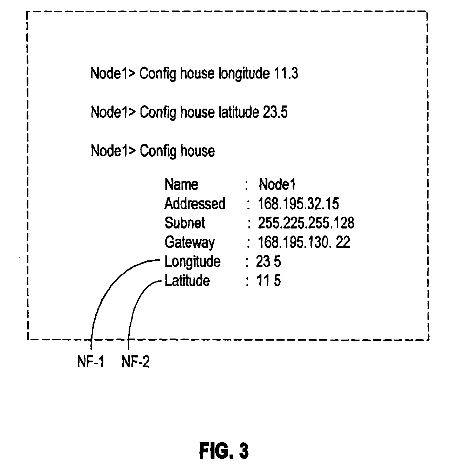

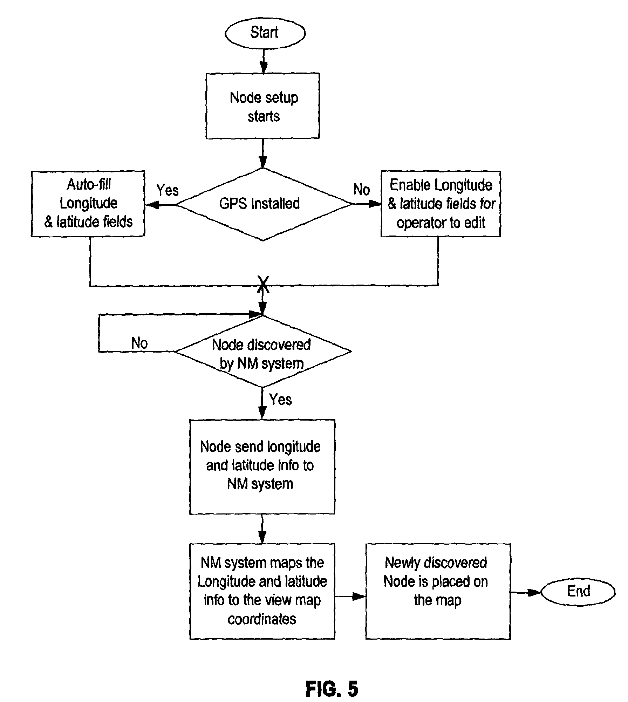

The invention is best illustrated in Figures 3, 4 and 5.

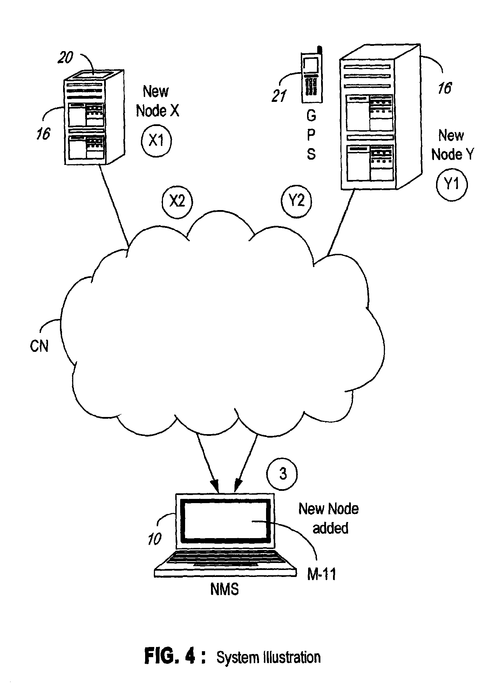

Network management server 10 having a network management system software installed therein is coupled, in the illustrated example, via internet to nodes 16. Nodes 16-1, 16-2, 16-3, 16-N are provided with a node configuration (normally having name, address, subnet and gateway fields) field shown in Figure 3 which includes two new fields NF-1 and NF-2 that have been added for the entry of longitude and latitude measurements made by GPS-type or equivalent devices. While GPS devices for measuring longitude and latitude are preferred, it will be appreciated that other positioning systems may be utilized to obtain the precise longitude and latitude measurements for a given node. As shown in Figure 4, for mobile-type nodes, an embedded GPS unit 20 may be provided. In the event the node is on a ship, or other moving station, the GPS will be periodically read to provide the most accurate longitude and latitude information to be entered into the longitude and latitude fields of the node configuration as shown in Figure 3. On the other hand, if the node is essentially to be stationary during use, such as new node 16-N, a GPS device 21 makes the GPS longitude and latitude measurements with the GPS instrument 21 close by the node 16-N and the GPS longitude and latitude information either keyed in by keyboard or coupled to the node from the GPS unit by way of wireless technique such as infrared or by RF.

A method and system for displaying a node of a communication network on a network management map (see Figure 2) wherein the geographical location of a node (Figure 3) is determined by a global positioning system (or equivalent positioning or location device) device to provide longitude and latitude information as depicted in the node configuration data set out in the node of Figure 3. In Figure 2, each node is displayed on a graphical user interface map on the monitor M-11 at the network management system 10 (Figure 4) and in a position on the network management map in accordance with its geographical location in terms of longitude and latitude information. In some embodiments, the GPS device can be located in the node as shown in Figure 4 at node 16-3. In other instances, the geographical location of the node, which may be determined by a GPS, is stored on the node in the longitude and latitude fields of the home information of the node. The home information of the node is transmitted to a network management system (NMS) 10 (see Figure 4) which includes the communication network for displaying on the network management map. When a new node is discovered in a communication network CN, the network management system (NMS) requests home information of the newly discovered node. It stores the requested home information in a database of an NMS and then displays the discovered node on the network management map (Figure 2) in a position that is in accordance with the longitude and latitude information in the requested home information.

Summarizing, adding new node scenario:
Case X (node without GPS automation):
   X1) A new node is powered-up and the Operator inputs the location information on the node,
   X2) Node information and location information are sent.
Case Y (node with GPS automation)
   Y1) A new node is powered-up and location information are automatically being filled with the GPS module.
   Y2) Node information and location information are sent.
   3) The NMS discovers the new node, calculates its location information in relation with the NMS map and places the node in the appropriate location on the map.

The invention has the following advantages over the prior art:
? It will save operators time by setting the nodes in the appropriate location in the network management software.
? It will reduce the confusion of having newly discovered nodes to show anywhere on the map or in a corner somewhere.
? It will eliminate the need for geographically descriptive names. Nodes can now be named based on their function or network resource, etc.
? Using an optional embedded GPS system, the node can automatically report its position.
? The use of GPS enhancement can be used as a security system. In case of a stolen node, utilizing this invention and its enhancement would allow the tracing of the node location before it shows on e-Bay, for example.

Thus, the invention represents a new network management method and system to geographically place nodes on the network management software map as well as locating them in longitude and latitude terms.

Each node carries geographical information regarding its location. The node may physically carry a GPS-type device. The Network management system automatically places the node on the network management map based on its geographical location.

While the invention has been described in relation to preferred embodiments of the invention, it will be appreciated that other embodiments, adaptations and modifications of the invention will be apparent to those skilled in the art.

## Claims

1. A system for displaying nodes of a communication network on a network management map, said communication network having a network management system software, comprising in combination:
means at each node for storing a geographical location of said node as determined by a positioning device,
said network management system software being adapted to cause said node and its position to be displayed on said network management map in accordance with said stored geographical location.

2. The system defined in claim 1 wherein a positioning device is located on the node and provides said longitude and latitude information to said node.

3. The system defined in claim 1 wherein the geographical location of the node is stored on the node in longitude and latitude measurement storage fields of the home information of the node.

4. The system defined in claim 1 wherein the home information of the node is transmitted to said network management system (NMS) of said communication network for displaying on the network management map.

5. The system defined in claim 1 wherein said positioning device is a GPS device.

6. The system defined in claim 3 **characterized in that** on discovery of a node in the communication network, the network management system requests from the discovered node, its home information database and uses the longitude and latitude information of said newly discovered node to cause that node to be displayed on said network management map in a position that is in accordance with said longitude and latitude fields in said requested home information.

7. A method for displaying nodes of a communication network on a graphical user interface network management map comprising the steps of:
at each node, determining its physical location in terms of node specific longitude and latitude measurements, storing said node specific longitude and latitude measurements in the configuration field of said node, and
causing all of said node positions to be displayed on said graphical user interface network management map in accordance with the longitude and latitude information constituting geographical location of said node.

8. The method defined in claim 7 wherein said node specific longitude and latitude information is determined in accordance with the readings of a GPS device.

9. The method defined in claim 8 wherein said GPS device is mobile with said node.
